# EUROPÄISCHE PATENTANMELDUNG

(11) **EP 1 232 899 A2**
(43) Veröffentlichungstag der Anmeldung: **21.08.2002**
(21) Anmeldenummer: 01130608.1
(22) Anmeldetag: 18.11.1999
(51) Int. Cl.: B60K 15/05, B60K 15/04

(54) **Verschluss für einen Kraftstoffbehälter eines Kraftfahrzeugs**

(30) Priorität: 18.11.1998 DE 19853157; 07.07.1999 DE 19931177
(62) Teilanmeldung aus: 99956011.3
(71) Anmelder: REUTTER, Heinrich, 71336 Waiblingen-Hohenacker (DE)
(72) Erfinder: REUTTER, Heinrich, 71336 Waiblingen-Hohenacker (DE)
(74) Vertreter: Fuhlendorf, Jörn, Dipl.-Ing.

(57) **Zusammenfassung**

Ein Verschluss (110) für einen Kraftstoffbehälter eines Kraftfahrzeugs ist mit einem an einem Einfüllstutzen (112) flüssigkeits- und gasdicht befestigbaren Verschlussdeckel (111) versehen, dessen oberer Deckelteil (116) über eine mit einer Flachdichtung (121) bestückten ringförmigen Dichtfläche an einer Stutzenauflage (122) des Einfüllstutzens liegt und dessen am Deckelteil axial vorstehendes Einsteckteil (117) am Einfüllstutzen (112) in axialer Richtung festlegbar ist, wobei des Einsteckteil (117) mit einem Anlageelement (120) versehen ist, das gegenüber einer Hinterschneidung oder -formung des Einfüllstutzens (112) hin und her bewegbar ist. Bei einem solchen Verschluss soll der Verschlussdeckel in bewegungsmäßig einfacherer Weise am Einfüllstutzen axial festlegbar sein. Hierzu ist vorgesehen, dass das Anlageelement (120) durch über den Umfang vorzugsweise gleichmäßig verteilt angeordnete und radial bewegbare Riegel (139) gebildet ist.

## Beschreibung

Die vorliegende Erfindung bezieht sich auf einen Verschluss für einen Kraftstoffbehälter eines Kraftfahrzeugs nach dem Oberbegriff des Anspruchs 1.

Bekannte Verschlüsse für Kraftstoffbehälter eines Kraftfahrzeugs werden durch eine einsteckende und drehende Bewegung entweder über einen Schraubverschluss oder über einen Bajonettverschluss mit dem Einfüllstutzen verbunden. Derartige Verschlussbewegungen sind für automatische Betankungsanlagen relativ umständlich und aufwendig.

Bei einem aus der US-A-3 126 728 bekannten Verschluss für Kraftstoffbehälter eines Kraftfahrzeugs der eingangs genannten Art ist das Anlageelement als boomerangförmiger Riegel ausgebildet, der entgegen der Wirkung einer Druckfeder schwenkbar verriegelnd gehalten ist. Das Lösen der Verriegelung ist mit Hilfe einer Betätigung erreicht, die entweder axial beweglich und verdrehbar oder nur verdrehbar ist und die mittels Nocken bzw. Nockenkurven mit den Riegeln in Wirkverbindung treten.

Aufgabe der vorliegenden Erfindung ist es, einen Verschluss für einen Kraftstoffbehälter eines Kraftfahrzeugs der eingangs genannten Art zu schaffen, bei dem der Verschlussdeckel in bewegungsmäßig einfacherer Weise am Einfüllstutzen axial festlegbar ist.

Zur Lösung dieser Aufgabe sind bei einem Verschluss für einen Kraftstoffbehälter eines Kraftfahrzeugs der eingangs genannten Art die im Anspruch 1 angegebenen Merkmale vorgesehen.

Durch die erfindungsgemäßen Maßnahmen ist erreicht, dass von der Einsteckbewegung des Einsteckteils in den Einfüllstutzen die festlegende Bewegung des Anlageelements im Einfüllstutzen abgeleitet ist. Dadurch ist bspw. roboterseitig nur eine einfache Bewegung erforderlich, um den Verschlussdeckel im Einfüllstutzen einzubringen und festzulegen bzw. zu lösen und auszubringen. Die Riegel werden rein translatorisch bewegt. Ausgestaltungen hierzu ergeben sich nach den Merkmalen des Anspruchs 2 oder des Anspruchs 3 und/oder der Anspruchs 4.

Die Bewegung von radialem Riegelelement oder Dichtungsring ergibt sich dann, wenn die Merkmale gemäß einem oder mehreren der Ansprüche 5 bis 10 vorgesehen sind.

Mit den Merkmalen gemäß Anspruch 11 ist insoweit eine erhöhte Sicherheit erreicht, als bei einem eventuellem Crash in diesem Bereich des Kraftfahrzeugs der Verschlussdeckel vom Stabilisierungsrand des Einfüllstutzens geschützt ist, so dass ein Lösen des Deckels in diesem Falle verhindert ist.

Um bei solchen Kraftfahrzeugen, deren Einfüllstutzen karosserieseitig zusätzlich durch eine Klappe überdeckt ist, wie dies bei nahezu allen der Fall ist, eine weitere Handhabungsvereinfachung zu erreichen, sind in bevorzugter Weise die Merkmale gemäß Anspruch 12 vorgesehen. Dadurch ist erreicht, dass mit dem Öffnen bzw. Schließen der Klappe von außen auch der Verschlussdeckel in den Einfüllstutzen schließend gebracht bzw. aus diesem wieder herausgenommen werden kann. Dies kann in vielfältigster Weise erfolgen, bspw. durch eine elektrische, pneumatische o.dgl. Verbindung. Gemäß dem Merkmal des Anspruchs 13 ist eine mechanische Verbindung in Form eines Hebelgestänges vorgesehen. Um auch dabei die sogenannte Crashsicherheit zu gewährleisten, sind die Merkmale gemäß Anspruch 14 vorgesehen. Dadurch ist erreicht, dass sich bei einer Verformung der Karosserie in diesem Bereich die Klappe vom Verschlussdeckel löst, so dass der letztere am Einfüllstutzen befestigt bleibt.

Gemäß einem weiteren bevorzugten Ausführungsbeispiel sind die im Anspruch 15 angegebenen Merkmale vorgesehen. Dadurch ist zusätzlich erreicht, dass zum Festlegen bzw. Lösen des Einsteckteils im Einfüllstutzen eine fernbedienbare Verriegelung und Entriegelung in einfacher Weise möglich ist. Mit anderen Worten, zum Entriegeln bzw. Lösen des Einsteckteils im Einfüllstutzen wird das Metallhydrid-Aktuator-Stellglied oder das Dehnstoff-Stellglied thermisch aktiviert, so dass der Verschluss vom Roboter abgenommen werden kann, und nach dem Betanken und Wiedereinsetzen des Einsteckteils in den Einfüllstutzen wieder thermisch deaktiviert, wodurch eine Verriegelung stattfindet.

Die thermische Aktivierung kann gemäß den Merkmalen des Anspruchs 21 in vorteilhafter Weise elektrisch über einen Thermowiderstand erfolgen, so dass dies in sehr einfacher Weise vom Inneren des Kraftfahrzeugs aus mittels Schalter oder von beliebiger Stelle aus mittels Fernbedienung gehandhabt werden kann.

Die Ausgestaltung des Anlageelementes und deren Bewegungsbeaufschlagung kann in vielfältiger Weise erfolgen. Beispielsweise kann die Bewegung und Abdichtung des Anlageelements bzw. dessen radial bewegbare Riegel gemäß den Merkmalen eines oder mehrerer der Ansprüche 16 bis 18 ausgestaltet sein kann.

Die Bewegungsbeaufschlagung und Anordnung eines oder mehrerer der Dichtringe des Anlageelementes kann gemäß den Merkmalen eines oder mehrerer der Ansprüche 19 und/oder 20 ausgeführt werden.

Weitere Einzelheiten der Erfindung sind der folgenden Beschreibung zu entnehmen, in der die Erfindung anhand der in der Zeichnung dargestellten Ausführungsbeispiele näher beschrieben und erläutert ist. Es zeigen:
- Figuren 1A und 1B: einen Verschluss für einen Kraftstoffbehälter eines Kraftfahrzeugs gemäß einem ersten Ausführungsbeispiel vorliegender Erfindung, in zwei unterschiedlichen Stellungen,
- Figuren 1C, 1D und 1E: eine Variante zum ersten Ausführungsbeispiel der Figuren 1A und 1B einschließlich einer Draufsicht gemäß den Pfeilen IE der Figur 1D;
- Figuren 2A und 2B: den Figuren 1A und 1B entsprechende Darstellungen, jedoch gemäß einem zweiten Ausführungsbeispiel vorliegender Erfindung;
- Figuren 3A und 3B: den Figuren 1A und 1B entsprechende Darstellungen, jedoch gemäß einem dritten Ausführungsbeispiel vorliegender Erfindung;
- Figuren 4A und 4B: den Figuren 1A und 1B entsprechende Darstellungen, jedoch gemäß einem vierten Ausführungsbeispiel vorliegender Erfindung;
- Fig. 5A und 5B: einen Verschluss für einen Kraftstoffbehälter eines Kraftfahrzeugs gemäß einem fünften Ausführungsbeispiel vorliegender Erfindung, in zwei unterschiedlichen Stellungen;
- Fig. 6A, 6B, 6C: jeweils eine der Fig. 5A ähnliche, jedoch abgebrochene bzw. unterschiedliche Stellung zeigende Darstellung sowie eine Draufsicht auf das Anlage- und Verriegelungselement gemäß einem sechsten und siebten Ausführungsbeispiel vorliegender Erfindung; und
- Fig. 7A und 7B: den Fig. 5A und 5B entsprechende Darstellungen, jedoch gemäß einem achten Ausführungsbeispiel vorliegender Erfindung.

Der in der Zeichnung gemäß mehreren Ausführungsbeispielen dargestellte Verschluss 110, 210, 310, 410, 510, 610 bzw. 710 für einen Kraftstoffbehälter eines Kraftfahrzeugs ist insbesondere für die automatische Betankung ausgebildet, wofür ein vereinfachter Bewegungsablauf beim Ein- und Ausbringen eines im Wesentlichen zylindrischen Verschlussdeckels 111, 211, 311, 411, 511, 611 bzw. 711 in bzw. aus dem Einfüllstutzen 112, 212, 312, 412, 512, 612 bzw. 712 des Kraftstoffbehälters und zum flüssigkeits- und gasdichten sowie crashfesten Verschließen und wieder Lösen des Verschlussdeckels mit dem bzw. von dem Einfüllstutzen erreicht und gewährleistet ist. Diese vereinfachte Schließ- und Öffnungsbewegung reduziert sich auf eine im Wesentlichen reine translatorische Bewegung des Verschlussdeckels in den bzw. aus dem Einfüllstutzen. In bevorzugter Weise ist für eine weitere Vereinfachung der automatischen Betankung eine Bewegungsverbindung 514, 617 bzw 714 zwischen dem Verschlussdeckel 111, 211, 311, 411, 511, 611 bzw. 711 und einer einen Teil der Karosserie des Kraftfahrzeugs bildenden Klappe 113, 213, 313, 413, 513, 613 bzw. 713 hergestellt, von deren Schwenkbewegung die translatorische Bewegung des Verschlussdeckels abgeleitet ist. Diese Verbindung kann, wie in der Zeichnung vereinfacht dargestellt, eine mechanische Verbindung 514, 617 bzw. 717 sein, sie kann aber auch durch eine elektromotorische, pneumatische o.dgl. Verbindung erreicht werden.

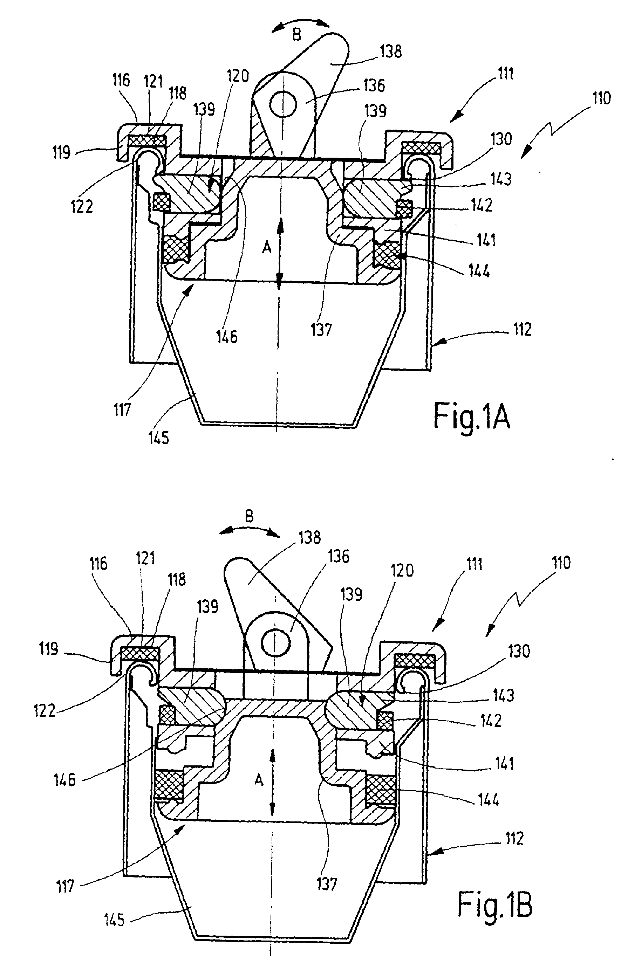

Gemäß den Figuren 1A und 1B besitzt der Verschlussdeckel 111 des Verschlusses 110 einen ebenen Deckelteil 116, der mit einem durchmesserkleineren Einsteckteil 117 fest verbunden ist. Der Deckelteil 116 besitzt an seiner Unterseite eine Ringnut 118, in der ein ebener Dichtungsring 121 eingelegt ist, mit welchem der Verschlussdeckel 11 auf einer Stutzenauflage 122 des Einfüllstutzens 112 dicht aufliegt.

Bei den in den Figuren 1A und 1B dargestellten Verschluss 110 ist das Einsteckteil 117 des Verschlussdeckels 111 mehrteilig ausgebildet und relativ zum Deckelteil 116 beweglich. Beim Deckelteil 116 ist der ebene Dichtungsring 121 unmittelbar in die unterseitige Ringnut 118 eingelegt. Der Deckelteil 116 ist mit einer mittigen Durchbrechung für eine Lasche 136 versehen, die mit einem glockenförmigen Element 137 des Einsteckteils 117 starr verbunden ist. An der Lasche 136 ist ein Kipphebel 138 angelenkt, der sich am Deckelteil 116 abstützt und mit dessen Verschwenken in Richtung des Doppelpfeiles B das Glockenelement 137 des Einsteckteils 117 axial bewegen lässt. Zwischen dem Glockenelement 137 und dem Deckelteil 116 sind ein Anlage- und Verriegelungselement 120 in Form von über den Umfang gleichmäßig verteilt angeordneten radial bewegbaren Segmenten 139 und ein ringförmiges Druckelement 141 angeordnet. Die Segmente 139 sind einerseits vom ringförmigen Druckelement 141 und andererseits vom Deckelteil 116 geführt. Die Segmente 139, die an einem Umfangsbereich von einem O-Ring 142 umfangen sind, besitzen an ihrem dem Deckelteil 116 zugewandten oberen Ende eine Nase 143, mit der sie in geschlossenem Zustand des Verschlussdeckels 111 unter die Ringkante 130 des Einfüllstutzens 112 greifen können (Figur 1A). Dem ringförmigen Druckelement 141 gegenüberliegend ist das glockenförmige Element 137 mit einem Dichtungsring 144 versehen, der zur abdichtenden Wirkung vom Druckelement 141 beaufschlagt wird. Das glockenförmige Element 137 ist im Bereich der Segmente 139 mit einer Kurvenfläche 146 versehen, an der das innere Ende der Segmente 139 anliegt und über die bei Relativbewegung des Glockenelements 137 gegenüber den Segmenten 139 und dem Druckelement 141 eine radiale Bewegung der Segmente 139 erfolgt.

Ausgehend von Figur 1B, in der die Position dargestellt ist, in der der Verschlussdeckel 111 aus dem Einfüllstutzen 112 gezogen werden kann, wird der Kipphebel 138 in Richtung des Pfeiles B bewegt, so dass sich eine Aufwärtsbewegung des glockenförmigen Elementes 138 gegenüber dem Deckelteil 116 ergibt. Mit dieser Aufwärtsbewegung werden die Segmente 139 radial bewegt, so dass sie die Ringkante 130 des Einfüllstutzens 112 untergreifen und des Weiteren der Dichtungsring 144 zwischen den unteren Ringrand des glockenförmigen Elementes 137 und das Druckelement 141 gequetscht wird, so dass sich eine Abdichtwirkung gegenüber der Innenumfangsfläche einer Innenschürze 145 des Einfüllstutzens 112 ergibt. Ferner ergibt sich, was jedoch nicht detailliert dargestellt ist, mit der Formschlussverbindung zwischen Segmenten 139 und Einfüllstutzen 112 eine Abdichtwirkung des O-Ringes 142 gegenüber dem oberen Innenbereich der Schürze 145 des Einfüllstutzens 112. Die Figuren 1A und 1B zeigen hierzu (links und rechts) zwei Varianten der Ausbildung der Schürze 145 des Einfülstutzens 112 in diesem unterhalb der Stutzenauflage 122 liegenden Bereich.

Es versteht sich, dass das Lösen des Verschlussdeckels 11 innerhalb des Einfüllstutzens 112 in entsprechend umgekehrter Weise, d.h. Rückbewegen des Kipphebels 138 erfolgt. Wenn auch die Klappe nicht dargestellt ist, versteht es sich, dass diese Bewegung des Kipphebels 138 auch vom Öffnen bzw. Schließen der Klappe abhängig gemacht werden kann.

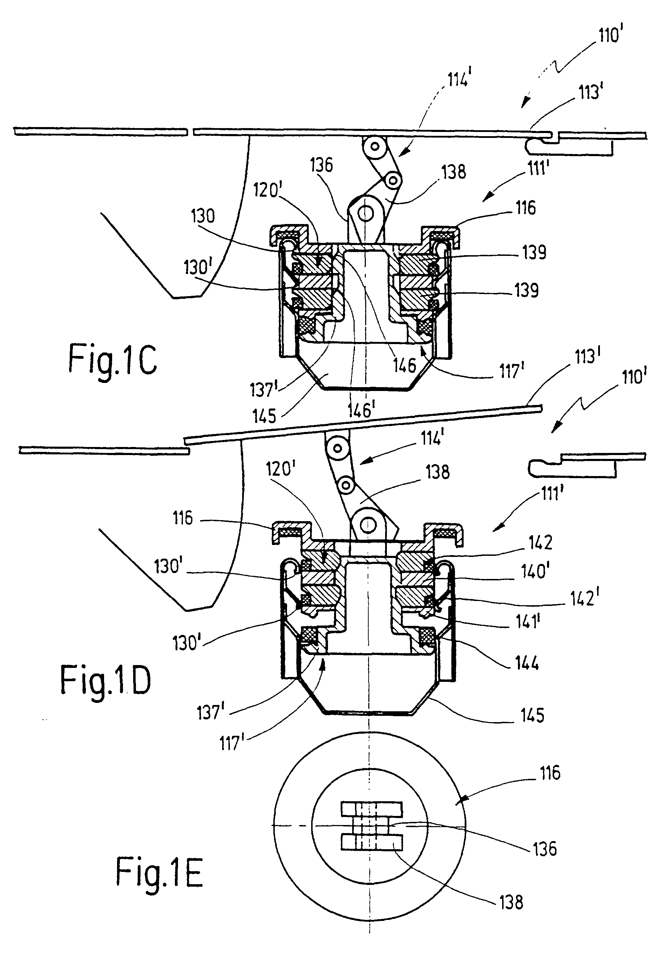

Die Figuren 1C, D und E zeigen eine Variante des Verschlusses 110 nach den Figuren 1A und 1B. Dieser Verschluss 110' unterscheidet sich vom Verschluss 110 im Wesentlichen dadurch, dass unterhalb der radial bewegbaren Segmente 139 eine weitere Anzahl radial bewegbarer Segmente 139' des Anlageleementes 120 angeordnet ist, wobei das ringförmige Druckelement 141' unter den zweiten bewegbaren Segmenten 139' angeordnet und zwischen den ersten bewegbaren Segmenten 139 und den zweiten bewegbaren Segmenten 139' eine ringförmige Führung 140' angeordnet ist. Auch die radiale Bewegung dieser zweiten Segmente 139' zur Stutzenschürze 245 wird von der axialen Bewegung des glockenförmigen Elementes 137' des Einsteckteils 117', das gegenüber dem glockenförmigen Element 137 der vorstehenden Variante länger ausgebildet ist, über entsprechende Kurvenflächen 146' abgeleitet. Da diese zweiten radial bewegbaren Segmente 139' ebenfalls eine am Einfüllstutzen 112' angeordnete Ringkante 130' untergreifen (Figur 1C), ergibt sich eine zusätzliche Formschlussverbindung.

Die Figuren 1C, D und E zeigen ferner eine mechanische Hebelverbindung 133' zwischen Verschlussdeckel 111' und Klappe 112'.

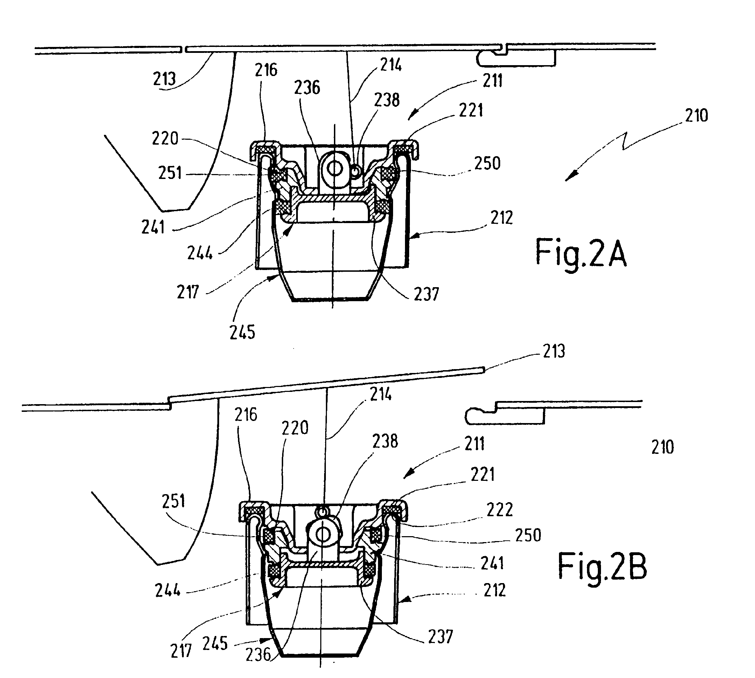

Der Verschluss 210 gemäß den Figuren 2A und 2B unterscheidet sich von dem Verschluss 110 nach den Figuren 1A und 1B dadurch, dass die Segmente 139 des Anlageelements 120 durch eine entsprechende ausgestaltete Ringdichtung 250 eines Anlagelementes 223 ersetzt sind und sowohl das Glockelement 237 des Einsteckteils 217 als auch das Druckelement 241 in anderer Weise ausgestaltet sind. Beim dargestellten Ausführungsbeispiel ist der Deckelteil 216 ähnlich dem Deckelteil 116 randseitig ausgebildet, jedoch mittig mit einer Einformung versehen, deren Boden mit einem Schlitz zum Durchtritt der Lasche 236 versehen ist, an der ein Exzenterhebel 238 angelenkt ist. Die Vertiefung ist derart, dass sowohl Lasche 236 als auch Kipphebel 238 innerhalb bzw. unterhalb der Oberseite des Deckelteils 216 sich befinden. Mit der Relativbewegung zwischen Deckelteil 216 und Druckelement 241 und dem hier nahezu zylindrischen Element 237 ergibt sich ein axiales Beaufschlagen sowohl des Dichtringes 244 als auch des Dichtringes 250, wobei der obere Dichtring 250 wie der Dichtring 244 zu einer Abdichtung gegenüber dem Innenumfang des Einfüllstutzens 212 führt aber darüber hinaus mit seinem durch das axiale Quetschen radial ausweichenden Bereich in eine Sicke 251 der Schürze 245 des Stutzens 212 formschlüssig eingreift. Auf diese Weise ergibt sich, entsprechend den vorhergehenden Ausführungsbeispielen, eine axial feste bzw. formschlüssige Verbindung zwischen Verschlussdeckel 211 und Einfüllstutzen 212.

Die Bewegungsabläufe während des Verschließens und Öffnens bzw. Ein- und Ausbringens des Verschlussdeckels 211 in bzw. aus den Einfüllstutzen 212 erfolgt in der vorbeschriebenen Weise. Es versteht sich auch hier, dass die erforderliche Schwenkbewegung des Exzenterhebels 238 entweder von Hand oder, wie angedeutet, über eine mechanische Kopplung 214 mit der Klappe 213 erfolgen kann.

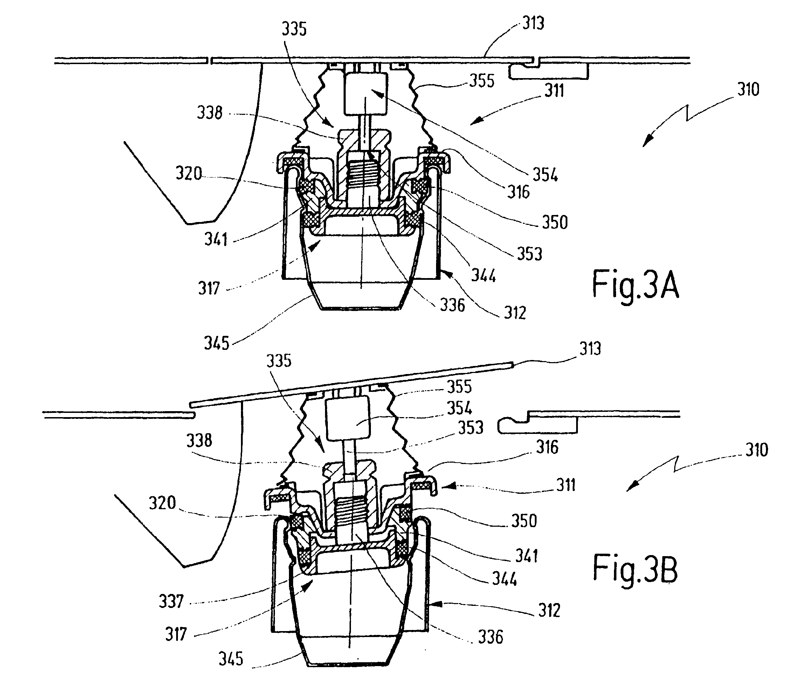

Bei dem in den Figuren 3A und 3B dargestellten Verschluss 310 erfolgt die Relativbewegung zwischen den Einzelelementen des Einsteckteils 317 untereinander und dem Deckelteil 316 mit Hilfe einer Art Spindelantrieb 335. Hierzu ist das Element 337 des Einsteckteils 317 mit einem Außengewindebolzen 336 versehen, über den eine Innengewindehülse 338 greift, die elektrisch oder pneumatisch angetrieben ist und deren Rotationsbewegung bspw. von der Öffnungsbewegung der Klappe 313 abgenommen ist. Gemäß diesen Figuren ist die Abtriebswelle 353 eines Elektromotors 354, der an der Klappe 313 schwenkbar aufgehängt ist, mit der Innengewindehülse 338 drehfest und axial beweglich verbunden. Mit der Klappe 313 ist der Verschlussdeckel 311 über einen starren Balg 355 oder über eine stablie Federaufhängung zur axialen Bewegung vebunden. Ansonsten sind das Element 337 und das Druckelement 341 des Einsteckteils 317 und der Deckelteil 316 des Verschlussdeckels 311 in nahezu identischer Weise wie beim Ausführungsbeispiel nach den Figuren 2A und 2B ausgebildet. Dies gilt auch für den mit der Schürze 345 versehenen Einfüllstutzen 312, der mit einer entsprechenden Sicke 351 versehen ist.

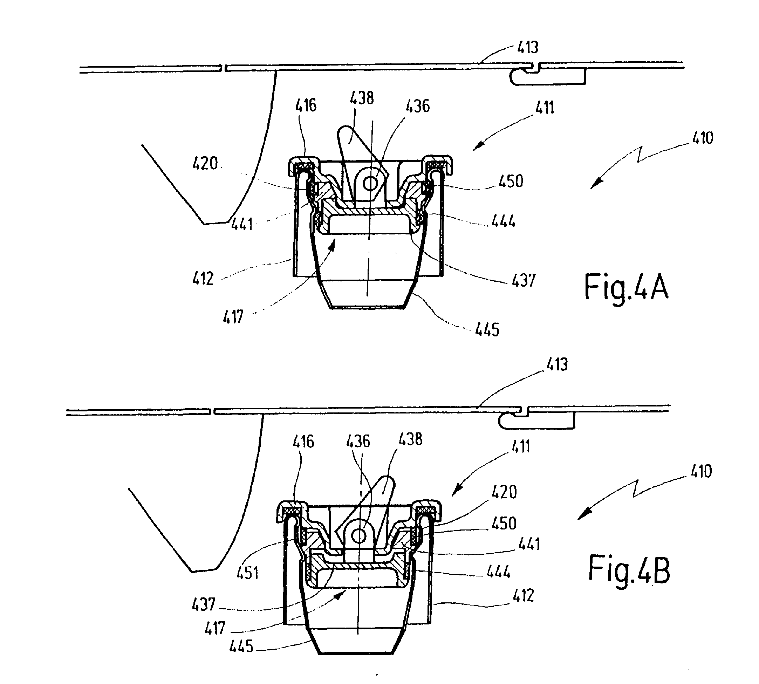

Das in den Figuren 4A und 4B dargestellte Ausführungsbeispiel eines Verschlusses 410 unterscheidet sich vom Ausführungsbeispiel nach den Figuren 2A und 2B dadurch, dass erstens statt des Exzenterhebels ein Kipphebel 438 und statt der im Querschnitt quadratischen oder runden Ringdichtungen eine Ringdichtung mit bandartigem länglich rechteckförmigem Querschnitt vorgesehen ist. In der Geschlossenstellung ergibt sich nach Figur 4A ein radial nach außen gerichtetes Auswölben der bandförmigen Ringdichtung 444 und 450. Auch hieraus resultiert eine formschlüssige Verbindung zwischen diesen Dichtungsringen 444, 450 und der in die Schürze 345 des Einfüllstutzens 412 eingearbeiteten Sicke 451.

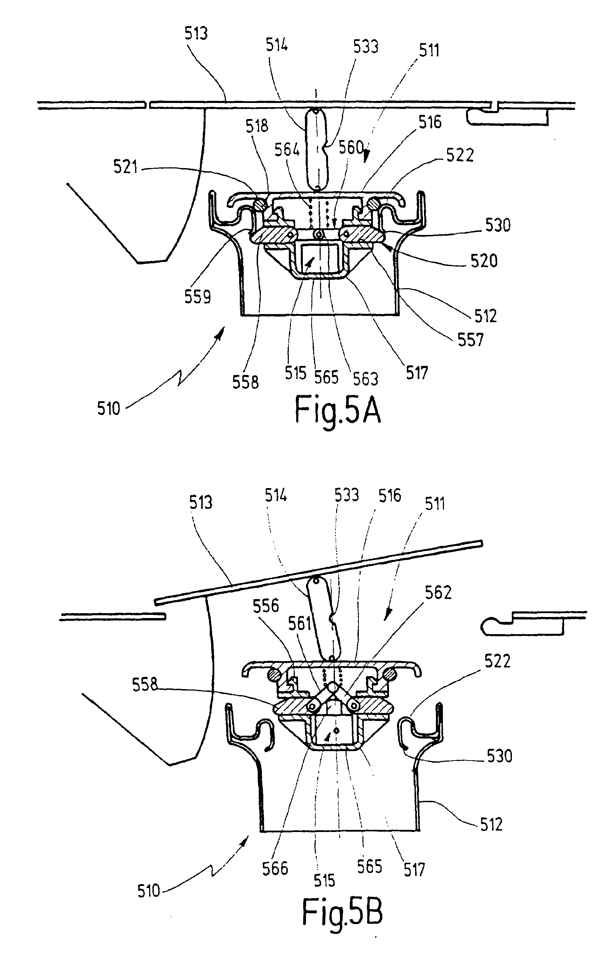

Bei den in den Figuren 5 bis 7 dargestellten Ausführungsbeispielen ist wie bei den Ausführungsbeispielen der Figuren 1 bis 4 vorgesehen, dass sich die vereinfachte Schließ- und Öffnungsbewegung reduziert sich auf eine im Wesentlichen rein translatorische Bewegung des Verschlussdeckels und auf eine radiale Bewegung eines im Verschlussdeckel 511, 611 bzw. 711 angeordneten Anlage- und Verriegelungselementes 520, 620 bzw. 720. Die radiale Bewegung des Anlage- und Verriegelungselementes 520, 620 bzw. 720 wird dabei jedoch von der vorzugsweise axialen Bewegung eines Stellglieds 515, 615 bzw. 715 in Form entweder eines thermochemischen Metallhydrid-Aktuators oder in Form eines thermischen Dehnstoffelementes abgenommen. Dabei ist das thermische Stellglied 515, 615 bzw. 715 mit einem elektrischen Thermowiderstand verbunden, der zur Aktivierung des Stellgliedes durch einen im Kraftfahrzeuginnern befindlichen Schalter oder durch Fernbedienung zuschaltbar bzw. mit elektrischem Strom beaufschlagbar ist. Dabei kann für die Bewegungsverbindung 514, 614 bzw. 714 zwischen dem Verschlussdeckel 511, 611 bzw. 711 und der beipielsweise in zeitlicher Verzögerung mit der elektrischen Aktivierung des Stellglieds 515, 615 bzw. 715 ein Stellmotor zum Öffnen der Klappe 513, 613 bzw. 713 betätigt werden. In entsprechender Weise folgt der Rückbewegung der Klappe mittels des Stellmotors in zeitlich versetzter Folge die Deaktivierung des Stellgliedes nach dem Einbringen des Verschlussdeckels in den Einfüllstutzen.

Gemäß den Fig. 5A und 5B besitzt der Verschlussdeckel 511 des Verschlusses 510 einen ebenen Deckelteil 516, der mit einem durchmesserkleineren Einsteckteil 517 fest verbunden ist. Der Deckelteil 516 besitzt an seiner Unterseite eine hohlkehlenartige Ringnut 518, in der ein Dichtungsring 521 eingelegt ist, mit welchem der Verschlussdeckel 511 auf einer Stutzenauflage 522 des Einfüllstutzens 512 in geschlossener Stellung gemäß Fig. 5A dicht anliegt. Dabei ist die Stutzenauflage 522 ein Teil eines nach innen umgebördelten Randes des Einfüllstutzens 512.

Das Einsteckteil 517, das mittels Rastelementen 556 an der Unterseite des Deckelteils 516 verrastbar hängend gehalten ist, besitzt zwei oder mehrere über den Umfang verteilt angeordnete radiale Ausnehmungen 557, in denen Anlage- und Verriegelungselemente 520 in Form jeweils eines Verriegelungsschiebers 558 radial bewegbar angeordnet ist. Die radial äußeren Enden der Verriegelungsschieber 558 besitzen eine Schrägfläche 559, mit der sie in verschlossenem Zustand des Verschlusses 510 unter einen unteren gebogenen Ringrand 530 der Stutzenauflage 522 greifen (Fig. 5A). Die beiden Verriegelungsschieber 558 sind an ihren radial inneren Enden mit einer Gelenkhebelanordnung 560 verbunden, deren Hebel 561 und 562 einerseits mit dem betreffenden Verriegelungsschieber 558 und andererseits miteinander gelenkig verbunden sind. An der Gelenkverbindung 563 der beiden gleich langen Hebel 561 und 562 stützt sich mit ihrem einen Ende eine Druckfeder 564 ab, deren anderes Ende an der Unterseite des Deckelteils 516 anliegt. Der Druckfeder 564 abgewandt befindet sich zwischen der Gelenkverbindung 563 und dem Boden 565 des Einsteckteils 517 das thermische Stellglied 515 mit einem axialen Stößel 566, der entgegen der Druckfeder 564 gegen die Gelenkverbindung 563 drücken kann.

Das thermische Stellglied 515, das in der Lage ist, thermische Energie direkt in potentielle Energie umzuwandeln, ist entweder ein thermo-chemischer Metallhydrid-Aktuator oder ein thermisches Dehnstoffelement (mit beispielsweise Wachs). Die Aktivierung dieses thermischen Stellgliedes 515 erfolgt durch die elektrische Strombeaufschlagung eines Thermowiderstandes, der in nicht dargestellter Weise mit dem thermischen Stellglied 515 thermisch gekoppelt ist.

Die Bewegungsverbindung zwischen Klappe 513 und Deckelteil 516 ist in Form einer nur schematisch dargestellten mechanischen Kopplung 514 vorgesehen, die außenseitig am Deckelteil 516 und innenseitig an der Klappe 513 angelenkt ist. Ein Kopplungsteil besitzt eine Sollbruchstelle 533, die im Falle eines Crashs die Verbindung zwischen dem Verschlussdeckel 511 und der Klappe 513 trennt. In nicht dargestellter Weise kann das Öffnen und Schließen der Klappe 513 beispielsweise mit Hilfe eines Stellmotors erreicht werden.

Das Verriegeln und Lösen des Verschlussdeckels 511 bzw. dessen Einsteckteils 517 gegenüber dem Einfüllstutzen 512 geht folgendermaßen vor sich:

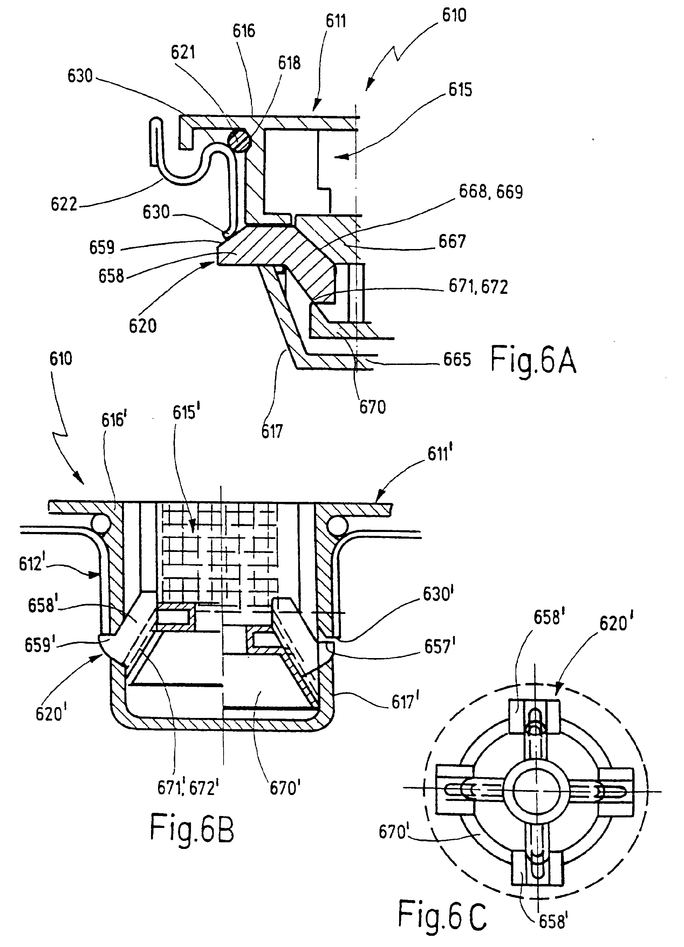

Fig. 5A zeigt die geschlossene bzw. Verschlussstellung, in der der Einsteckteil 517 des Verschlussdeckels 511 innerhalb des Einfüllstutzens 512 und mit diesem axial bewegungsschlüssig verriegelt ist und in der der Deckelteil 516 des Verschlussdeckels 511 abdichtend auf der Stutzenauflage 522 des Einfüllstutzens 512 aufliegt. In dieser Verschlussstellung ist das thermische Stellglied 515 in seiner zurückgezogenen deaktivierten Position. Soll zum automatischen Betanken des Kraftfahrzeugs der Einfüllstutzen 512 geöffnet werden, wird durch einen Schalter im Kraftfahrzeuginnern oder durch eine Fernbedienung das thermische Stellglied 515 in der Weise aktiviert, dass der nicht dargestellte Thermowiderstand mit Spannung bzw. Strom beaufschlagt wird, so dass sich der Thermowiderstand erwärmt und seine Wärme an das thermische Stellglied 515 abgibt, was eine axiale Bewegung von dessen Stößel 566 zur Folge hat. Die Stellkraft des thermischen Stellgliedes 515 überwindet die Druckkraft der Druckfeder 564, so dass gemäß Fig. 6B die Gelenkhebelanordnung 560 entgegen der Wirkung der Druckfeder 564 ausgelenkt wird, was eine radiale Bewegung der Verriegelungsschieber 558 nach innen zur Folge hat, die dadurch vom unteren Ringrand 530 der Stutzenauflage 522 freikommen. Nun ist der Verschlussdeckel 511 gegenüber dem Einfüllstutzen 512 gelöst bzw. frei. Durch die mechanische Bewegungsverbindung 514 kann mit der Schwenkbewegung der Klappe 513 der Verschlussdeckel 511 aus und vom Einfüllstutzen 512 abgehoben werden, so dass der Einfüllstutzen 512 zur automatischen Roboterbetankung (oder auch zur Handbetankung) frei zugänglich ist. Das verriegelnde Verschließen des Einfüllstutzens 512 mittels des Verschlussdeckels 511 erfolgt in umgekehrter Weise, d.h., mit dem Schließen der Klappe 513 gelangt der Verschlussdeckel 511 auf und in den Einfüllstutzen 512. Ist dieses Einbringen beendet, wird das thermische Stellglied 515 wieder deaktiviert, so dass mit dem Abkühlen des Metallhydrid-Aktuators oder des Dehnstoffelementes dessen Stellkraft nachlässt, so dass die Druckfeder 564 in der Lage ist, die Gelenkhebelanordnung 560 und damit die Verriegelungsschieber 558 wieder in ihre Lage nach Fig. 5A zu bewegen.

Fig. 6A zeigt eine mit der Ausführung des Verschlussdeckels 511 nach den Fig. 5A und 5B ähnliche Ausgestaltung des Verschussdeckels 611. Auch bei diesem Ausführungsbeispiel sind der Deckelteil 616 und der Einsteckteil 617 fest miteinander verbunden, wobei im Einsteckteil 617 oder zwischen Einsteckteil 617 und Deckelteil 616 radiale Ausnehmungen 657 vorgesehen sind, in denen radiale Verriegelungsschieber 658 radial bewegbar sind, die mit ihrer Schrägfläche 659 unter den Ringrand 630 der Stutzenauflage 622 greifen. Unterschiedlich zum vorhergehenden Ausführungsbeispiel ist die Aktivierung der radialen Bewegung der Verriegelungsschieber 658. Hierzu besitzen die Verriegelungsschieber 658 an ihrer radialen Innenseite sowohl oben als auch unten geneigt verlaufende Gleitflächen 669 bzw. 672, die mit entsprechenden Gleitflächen 668 bzw. 671 eines axial bewegbaren ersten Stellelementes 667 bzw. zweiten Stellelements 670 zusammenwirken. Das obere Stellelement 667 ist an seinem einen Ende vom thermischen Stellglied 615 beaufschlagt und an seinem anderen Ende mit dem zweiten Stellelement 670 starr verbunden.

Die Verriegelung und Entriegelung des Verschlussdeckels 611 innerhalb des Einfüllstutzens 612 erfolgt ebenfalls durch Aktivierung und Deaktivierung des thermischen Stellglieds 615 in der Weise, dass hier mit der Deaktivierung die Verriegelungsschieber 658 von der Stutzenauflage 622 freikommen, während mit der Aktivierung des thermischen Stellglieds 615 die in Fig. 6A dargestellte Verriegelung erfolgt. Es versteht sich, dass dann, wenn das thermische Stellglied 615 zwischen dem zweiten Stellelement 670 und dem Boden 665 des Einsteckteils 617 angeordnet ist, oder dann, wenn die Paare von Gleitflächen 668, 669 und 671, 672 in die andere Richtung (gemäß Fig. 6A nach oben) geneigt sind, das thermische Stellglied 615 zum Lösen des Einsteckteils 617 und für die Verriegelungsstellung des Verschlussdeckels 611 im Einfüllstutzen 612 deaktiviert werden muss.

Einen derartigen Verschlussdeckel 611' zeigen die Fig. 6B und 6C. Das Anlage- und Verriegelungselement 620' besitzt hier vier gleichmäßig über den Umfang verteilt angeordnete Verriegelungsschieber 658', die unter vorzugsweise etwa 30° gegenüber der Längsmittelachse des Verschlusses 610' geneigt an einem unteren Stellelement 670' geführt gehalten sind. Hierzu besitzen die Verriegelungsschieber 658' und das untere Stellelement 670' aneinander anliegende genutete bzw. gefederte Gleitflächen 671' bzw. 672'. Das thermische Stellglied 615' sitzt einerseits auf der Oberseite des unteren Stellelementes 670' auf und stützt sich andererseits am Deckelteil 616' in nicht im Einzelnen dargestellter Weise ab. Das mit dem Deckelteil 616' einstückige Einsteckteil 617' besitzt radiale Schlitze 657', durch die die Verriegelungsschieber 658' mit ihren nasenartigen Enden 659' greifen.

Die linke Seite der Fig. 6B zeigt die Verriegelungsstellung der Verriegelungsschieber 658' unter dem Ringrand 630' des Einfüllstutzens 612' bei deaktiviertem thermischem Stellglied 615'. Wird das thermische Stellglied 615' aktiviert, wird das untere Stellelement 670' gemäß der rechten Hälfte der Fig. 6B nach unten bewegt, wodurch die Verriegelungsschieber 658' sich nach unten und nach innen bewegen und dadurch mit ihrem nasenförmigen Ende 659' von dem unteren Einfüllstutzenrand 630' freikommen. Diese Gleitbewegung wird unterstützt durch eine untere Gleitschrägfläche der Schlitze 657'. Der Verschlussdeckel 611' kann damit, wie zu den anderen Ausführungsbeispielen beschrieben, aus dem Einfüllstutzen 612' entnommen werden. Mit der Deaktivierung des thermischen Stellgliedes 615' erfolgt eine Bewegung des unteren Stellelementes 670' nach oben, die gegebenenfalls von einer nicht dargestellten Druckfeder unterstützt oder auch ausgeführt werden kann.

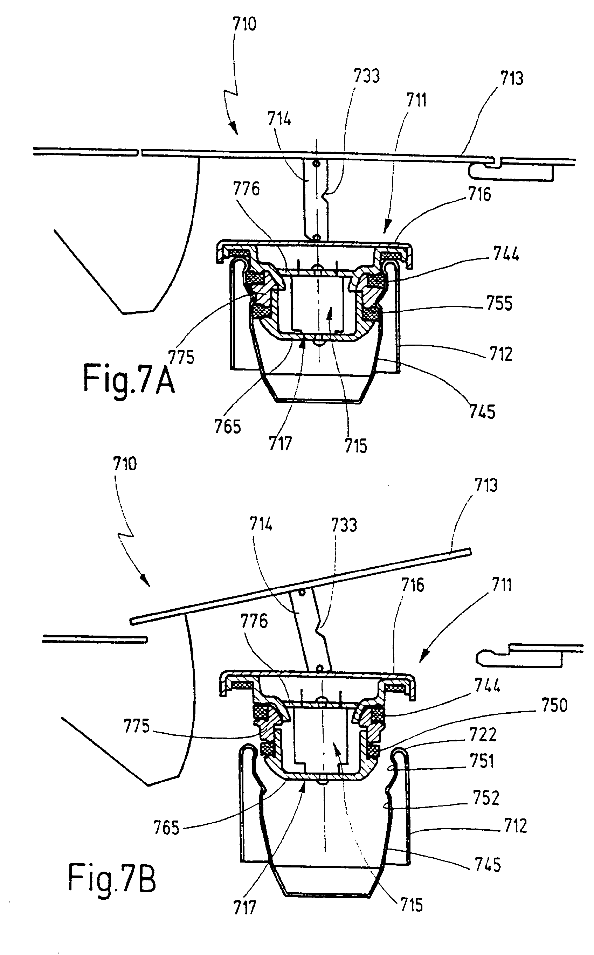

Bei dem in den Fig. 7A und 7B dargestellten Ausführungsbeispiel des Verschlusses 710 ist der Deckelteil 716 an seiner Unterseite mit einer flachen Ringdichtung 721 versehen, die in geschlossener Stellung auf der konkav gewölbten Stutzenauflage 622 aufliegt (Fig. 7A). Der Einfüllstutzen 712 ist derart geformt, dass eine in Verlängerung der Stutzenauflage 722 nach innen gezogene Stutzenschürze 745, die den Einsteckteil 717 aufnimmt, mit hier beispielsweise zwei in axialem Abstand angeordneten Ringsicken 751 versehen ist.

Bei diesem Ausführungsbeispiel sind Deckelteil 716 und Einsteckteil 717 axial beweglich zueinander geführt gehalten. Zwischen Deckelteil 716 und Einsteckteil 717 ist ein Ringteil 775 axial beweglich geführt gehalten. Zwischen dem Deckelteil 716 und dem Ringteil 775 einerseits und dem Ringteil 775 und dem Einsteckteil 717 andererseits ist jeweils eine Ringdichtung 744 bzw. 750 angeordnet. Die Ausbildung und Anordnung der Ringdichtungen 744 und 750 sind derart, dass die Ringdichtungen zwischen den Verschlussdeckelteilen 716, 775 und 717 bei deren axialer Bewegung in radialer Richtung ausweichen und sich in die Ringsicken 751, 752 dichtend und axial verriegelnd einlegen können.

Das thermische Stellglied 715 befindet sich zwischen dem Boden 765 des Einsteckteils 717 und einem Zwischenboden 776 des Deckelteils 716, was auch beim Ausführungsbeispiel nach Figur 6 machbar ist.

Soll ausgehend von der geschlossenen Stellung nach Fig. 7A der Verschluss 710 geöffnet werden können, wird das thermische Stellglied 715, wie vorhergehend beschrieben, aktiviert, wodurch aufgrund der dadurch sich ergebenden Stellkräfte und des Stellweges Deckelteil 716 und Einsteckteil 717 relativ zueinander bzw. auseinander bewegt werden. Genauer gesagt, wird der Einsteckteil 717 vom Deckelteil 716 axial wegbewegt. Dadurch wird die axiale Pressung der Dichtungsringe 744, 750 gelöst, wodurch sich diese Dichtungsringe radial zurückbewegen und aus der jeweiligen Ringsicke 751, 752 der Stutzenschürze 745 des Einfüllstutzens 712 freikommen. In dieser Position der Ringdichtungen 744 und 750 (Fig. 7B) kann der Verschlussdeckel 711 aus dem Einfüllstutzen 712 herausgezogen und abgenommen werden.

Dies erfolgt in der zu Fig. 5A, 5B beschriebenen Weise. Während dieses Vorganges und während des automatischen oder von Hand Befüllens des Kraftfahrzeugtanks bleibt, um dies nochmals zu erwähnen, das thermische Stellglied 715 aktiviert. Das Verschließen und Verriegeln des Verschlussdeckels 711 in den bzw. im Einfüllstutzen 712 erfolgt in entsprechend umgekehrter Weise: Ist der Verschlussdeckel 711 in den Einfüllstutzen 712 eingesteckt, wird das thermische Stellglied 715 deaktiviert, so dass aufgrund der Abkühlung des thermischen Stellelementes die Stellkräfte in die andere Richtung wirken. Damit wird, da das thermische Stellglied 715 sowohl mit seinem ortsfesten Ende am Boden 776 des Deckelteils 716 als auch mit seinem bewegbaren Stellstößel mit dem Boden 765 des Einsteckteils 717 fest verbunden ist, der Einsteckteil 717 in Richtung zum Deckelteil 716 zurückgezogen, wodurch die Dichtungsringe 744, 750 gequetscht werden und sich radial in die Ringsicken 751 752 zur Verriegelung bewegen. Auch bei diesem Ausführungsbeispiel kann in festgelegtem zeitlichem Abstand der Aktivierung des thermischen Stellglieds 715 die Bewegung der mit dem Verschlussdeckel 711 verbundenen Klappe 713 und der vorgenannten Bewegung der Klappe 713 die Deaktivierung des thermischen Stellglieds 715 nachfolgen.

## Patentansprüche

1. Verschluss (110, 210, 310, 410, 510, 610, 710) für einen Kraftstoffbehälter eines Kraftfahrzeugs, mit einem an einem Einfüllstutzen (112, 212, 312, 412, 512, 612, 712) flüssigkeits- und gasdicht befestigbaren Verschlussdeckel (111, 211, 311, 411, 511, 611, 711), dessen oberer Deckelteil (116, 216, 316, 416, 516, 616, 716) über eine mit einer Flachdichtung (121, 221, 321, 421, 521, 621, 721) bestückten ringförmigen Dichtfläche an einer Stutzenauflage (122, 222, 322, 422, 522, 622, 722) des Einfüllstutzens liegt und dessen am Deckelteil axial vorstehendes Einsteckteil (117, 217, 317, 417, 517, 617, 717) am Einfüllstutzen (112, 212, 312, 412, 512, 612, 712) in axialer Richtung festlegbar ist, wobei das Einsteckteil (117, 217, 317, 417, 517, 617, 717) mit einem Anlageelement (120, 220, 320, 420, 520, 620, 720) versehen ist, das gegenüber einer Hinterschneidung oder -formung des Einfüllstutzens (112, 212, 312, 412, 512, 612, 712) hin und her bewegbar ist, **dadurch gekennzeichnet, dass** das Anlageelement (120,220,320,420,520,620,720) durch über den Umfang von gleichmäßig verteilt angeordnete und radial bewegbare Riegel (139, 558, 658) gebildet ist.

2. Vorrichtung nach Anspruch 1, **dadurch gekennzeichnet, dass** die radialen Riegel (139, 558, 658) sich an einer Unterkante (130, 530, 630) des Einfüllstutzens (112, 512, 612) anlegen.

3. Verschluss nach Anspruch 1, **dadurch gekennzeichnet, dass** der Riegel(220, 720) durch einen axial zusammendrückbaren und radial ausweichenden Dichtungsring (250, 750) gebildet ist.

4. Verschluss nach Anspruch 3, **dadurch gekennzeichnet, dass** der Dichtungsring (250, 750) sich radial in eine Umfangssicke (251, 751) des Einfüllstutzens (212, 312, 412, 712) legt.

5. Verschluss nach mindestens einem der Ansprüche 1 bis 4, **dadurch gekennzeichnet, dass** das Einsteckteil (117, 217, 317, 417) mehrteilig ausgebildet ist und dass die radiale Bewegung von Riegel (139) oder Dichtungsring (250) durch eine radiale Relativbewegung zwischen den Einzelelementen des Einsteckteils bewirkt ist.

6. Verschluss nach mindestens einem der Ansprüche 1 bis 4, **dadurch gekennzeichnet, dass** die radiale Bewegung von Riegel (139) oder Dichtungsring (250) durch eine Relativbewegung zwischen Deckelteil (116, 216, 316, 416) und Einsteckteil (117, 217, 317, 417) bewirkt ist.

7. Verschluss nach mindestens einem der Ansprüche 1 bis 6, **dadurch gekennzeichnet, dass** der Einsteckteil (117, 217, 317, 417) endseitig einen Dichtungsring (144) aufweist, der sich radial gegen einen Innenwandungsbereich des Einfüllstutzens (112, 212, 312, 412) legt.

8. Verschluss nach mindestens einem der Ansprüche 1 bis 7, **dadurch gekennzeichnet, dass** der die Relativbewegung zwischen dem Deckelteil (116, 216, 416) und dem Einsteckteil und/oder zwischen den Einzelelementen des Einsteckteils (117, 217, 417) mittels eines Hebels (138, 238, 338), vorzugsweise eines Kipp- oder Exzenterhebels erfolgt.

9. Verschluss nach mindestens einem der Ansprüche 1 bis 7, **dadurch gekennzeichnet, dass** die Relativbewegung zwischen dem Deckelteil (316) und dem Einsteckteil (317) und/oder zwischen den Einzelelementen des Einsteckteils durch eine drehende Antriebsbewegung (335) erfolgt.

10. Verschluss nach Anspruch 8 oder 9, **dadurch gekennzeichnet, dass** das eine Element des Bewegungsmechanismus mit einem Einzelelement des Einsteckteils (117, 217, .317, 417) verbunden ist und das andere Element des Bewegungsmechanismus am anderen Element drehbar oder gelenkig gehalten ist und sich am Deckelteil (116, 216, 316, 416) abstützt.

11. Verschluss, mit einer den Einfüllstutzen karosserieseitig überdeckenden Klappe, nach mindestens einem der Ansprüche 1 bis 10, **dadurch gekennzeichnet, dass** der Verschlussdeckel (111, 211, 311, 411, 511, 611, 711) mit der Klappe (113, 213, 413, 513, 613, 713) bewegungsmäßig verbunden ist.

12. Verschluss nach Anspruch 11, **dadurch gekennzeichnet, dass** der Verschlussdeckel (511, 611, 711) mit der Klappe (513, 613, 713) über ein Hebelgestänge (514, 614, 714) verbunden ist.

13. Verschluss nach Anspruch 12, **dadurch gekennzeichnet, dass** das Hebelgestänge (514, 614, 714) eine Sollbruchstelle (533, 633, 733) aufweist.

14. Verschluss nach einem der Ansprüche 1 bis 3, 11 bis 13 **dadurch gekennzeichnet, dass** die Bewegung des Anlageelements (523, 623, 723) gegenüber der Hinterschneidung oder -formung des Einfüllstutzens (512, 612, 712) von einem thermochemischen Metallhydrid-Aktuator-Stellglied oder von einem thermischen Dehnstoff-Stellglied abgenommen ist.

15. Verschluss nach Anspruch 14, **dadurch gekennzeichnet, dass** die Riegel (558) durch eine Gelenkhebelanordnung (560) miteinander verbunden sind, die bewegungsmäßig vom Stellglied (515) beaufschlagt ist.

16. Verschluss nach Anspruch 15, **dadurch gekennzeichnet, dass** die Gelenkhebelanordnung (560) dem Stellglied (515) abgewandt von einer Druckfeder (564) beaufschlagt ist.

17. Verschluss nach mindestens einem der Ansprüche 1, 15, 16, **dadurch gekennzeichnet, dass** die Riegel (658) radial innenseitig über eine geneigte Gleitflächenanordnung (668, 669; 671, 672) von einem axial bewegbaren und vom Stellglied (615) angetriebenen Stellelement (667, 670) beaufschlagt sind.

18. Verschluss nach Anspruch 17, **dadurch gekennzeichnet, dass** die Riegel (658) beidseitig von zwei gegenläufigen geneigten Gleitflächenanordnungen (671, 672; 668, 669) beaufschlagt sind.

19. Verschluss nach den Ansprüchen 3 und 14, **dadurch gekennzeichnet, dass** der Dichtungsring (744, 750) zwischen dem Einsteckteil (717) und dem gegenüber diesem axial bewegbaren Deckelteil (716) gehalten ist und dass zwischen Deckelteil (716) und Einsteckteil (717) das Stellglied (715) vorgesehen ist.

20. Verschluss nach Anspruch 19, **dadurch gekennzeichnet, dass** zwischen Deckelteil (716) und Einsteckteil (717) ein Ringteil (775) gehalten ist, zwischen dem und dem Deckelteil (716) einerseits und zwischen dem und dem Einsteckteil (717) andererseits jeweils ein Dichtungsring (744, 750) angeordnet ist.

21. Verschluss nach Anspruch 14, **dadurch gekennzeichnet, dass** das Stellglied (515, 615, 715) über einen elektrischen Thermowiderstand beaufschlagt ist.
